# FASCICULE DE BREVET EUROPEEN

(11) **EP 2 729 980 B1**
(45) Date de publication et mention de la délivrance du brevet: **21.09.2016**
(21) Numéro de dépôt: 12732673.4
(22) Date de dépôt: 06.07.2012
(51) Int. Cl.: H01M 8/02, H01M 8/04, H01M 8/10, H01M 8/12

(54) **PLAQUE SÉPARATRICE AVEC INJECTION INTERMÉDIAIRE DE GAZ , PILE À COMBUSTIBLE ET PROCÉDÉ D'ALIMENTATION D'UNE PILE À COMBUSTIBLE**
SEPARATORENPLATTE MIT INTERMEDIÄRER GASEINSPEISUNG, BRENNSTOFFZELLE UND VERFAHREN ZUR GASVERSORGUNG
SEPARATOR PLATE HAVING INTERMEDIATE GAS INJECTION MEANS, FUEL CELL AND PROCESS FOR SUPPLYING GAS

(30) Priorité: 06.07.2011 FR 1156110
(43) Date de publication de la demande: 14.05.2014
(73) Titulaire: Areva Stockage d'Energie, 13547 Aix-en-Provence (FR)
(72) Inventeur: QUINTIERI, Christian, F-13100 Aix en Provence (FR)
(74) Mandataire: Lavoix
(86) Numéro de dépôt international: PCT/EP2012/063291
(87) Numéro de publication internationale: WO 2013/004822

(56) Documents cités:
- FR-A1- 2 847 722
- JP-A- 10 284 095
- US-A1- 2002 187 383
- US-A1- 2007 099 063

## Description

La présente invention concerne le domaine des piles à combustible à membrane échangeuse d'ions.

Une pile à combustible à membrane échangeuse d'ions comprend un empilement de cellules électrochimiques élémentaires. Chaque cellule électrochimique comprend un ensemble membrane-électrode (« EME ») pris en sandwich entre deux plaques séparatrices.

L'ensemble membrane-électrode est stratifié et comprend une membrane échangeuse d'ions prise en sandwich entre deux électrodes. Chaque électrode comprend une couche active adjacente à la membrane et une couche de diffusion de gaz. Une électrode forme anode et l'autre forme cathode.

Chaque plaque séparatrice comprend des gorges ménagées dans sa face contre laquelle est plaquée l'ensemble membrane-électrode de façon à définir entre la plaque séparatrice et l'ensemble membrane-électrode des conduits de circulation d'un gaz réactif en contact avec l'ensemble membrane-électrode.

Lors du fonctionnement de la pile à combustible, du combustible alimente les gorges de la plaque côté anode et du comburant alimente les gorges de la plaque côté cathode. Le combustible fournit côté anode des électrons et des ions. Les électrons sont récupérés par l'anode. Les ions traversent la membrane et se combinent avec des électrons fournis par la cathode et le comburant en au moins un produit résultant.

La pile à combustible est par exemple du type PEMFC (« Proton Exchange Membrane Fuel Cell »). La membrane échangeuse d'ions est alors une membrane échangeuse de protons. En fonctionnement, les gorges de la plaque séparatrice côté anode sont alimentées en hydrogène et les gorges de la plaque séparatrice côté cathode sont alimentées en air ou en oxygène. L'hydrogène produit des protons qui traversent la membrane et des électrons qui sont captés par l'anode. Les protons se combinent côté cathode avec des électrons fournis par la cathode et l'oxygène pour produire de l'eau.

Il résulte donc du fonctionnement de la pile à combustible la production d'eau susceptible de perturber l'écoulement du gaz réactif dans les gorges, notamment en créant des bouchons. Une alimentation perturbée est susceptible de diminuer le rendement de la pile à combustible.

JP 10 284 095 A, FR 2 847 722 A1 et US 2002/187383 A1 divulguent chacun une plaque séparatrice de pile à combustible comprenant des moyens d'injection de gaz réactif dans un tronçon intermédiaire d'une gorge ménagée dans une face de la plaque séparatrice.

Un but de l'invention est de proposer une plaque séparatrice permettant une distribution satisfaisante de gaz réactif sur un ensemble membrane-électrode.

A cet effet, l'invention propose une plaque séparatrice de pile à combustible selon la revendication 1. Des caractéristiques optionnelles figurent aux revendications 2 à 6.

L'invention concerne également une pile à combustible selon la revendication 7.

L'invention concerne encore un procédé d'alimentation d'une pile à combustible selon la revendication 8.

L'invention et ses avantages seront mieux compris à la lecture de la description qui va suivre, donnée uniquement à titre d'exemple, et faite en référence aux dessins annexés, sur lesquels :
- la Figure 1 est une vue schématique en coupe d'une pile à combustible ;
- les Figures 2 et 3 sont des vues d'une plaque séparatrice de la pile à combustible, respectivement de dessus et en coupe selon III-III sur la Figure 2 ; et
- les Figures 4 et 5 sont des vues d'une plaque séparatrice selon une variante, respectivement de dessus et en coupe selon V-V sur la Figure 4 ;

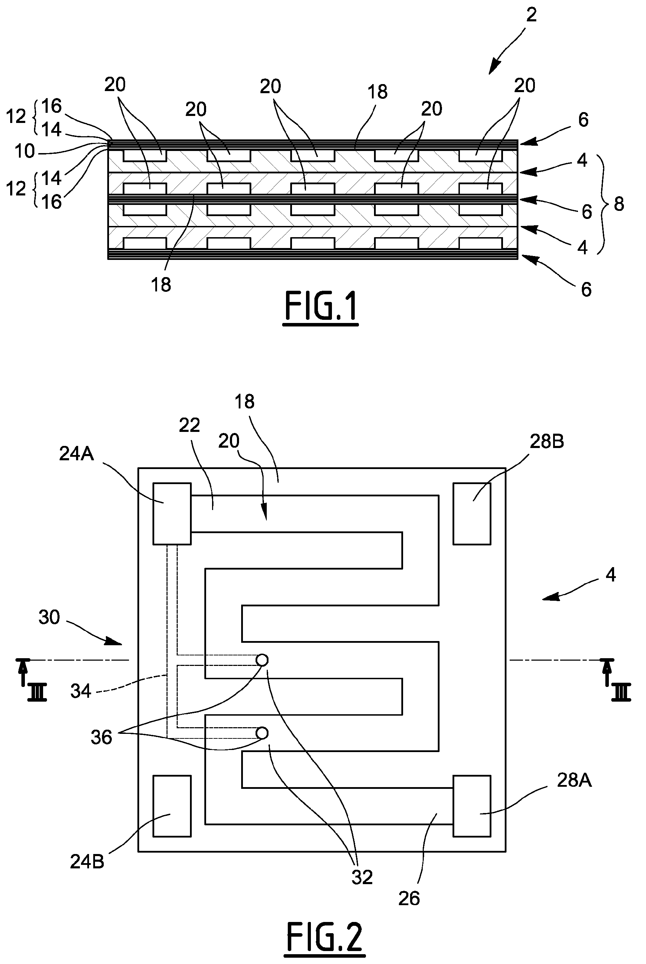

En référence à la Figure 1, la pile à combustible 2 comprend un empilement de plaques séparatrices 4 et d'ensembles membrane-électrode 6 en alternance. Un tel empilement est couramment désigné par le terme anglais « stack ».

Chaque ensemble membrane-électrode 6 est pris en sandwich entre deux plaques séparatrices 4. Chaque ensemble formé de deux plaques séparatrices 4 disposées de part et d'autre d'un ensemble membrane-électrode 6 définit une cellule électrochimique 8 élémentaire de la pile à combustible 2.

Chaque ensemble membrane-électrode 6 est en forme de plaque et stratifié. Chaque ensemble membrane-électrode 6 comprend une membrane 10 échangeuse d'ions et deux électrodes 12 disposées de part et d'autre de la membrane 10.

La membrane 10 est notamment une membrane échangeuse de protons, et la pile à combustible du type PEM (« Proton Exchange Membrane »).

Chaque électrode 12 est conductrice électriquement. Chaque électrode 12 comprend une couche active 14 et une couche de diffusion de gaz 16. Une des électrodes 12 définit une anode et l'autre une cathode.

Les plaques séparatrices 6 assurent la fonction de conduction électrique. Les plaques séparatrices 6 sont électriquement conductrices et en contact électrique avec les électrodes 12.

Les plaques séparatrices 6 assurent la fonction de distribution de gaz réactifs de part et d'autre de l'ensemble membrane-électrode 6 et d'évacuation des produits résultant.

Les plaques séparatrices 4 illustrées sur la figure 1 sont « bipolaires » : chaque plaque séparatrice 4 est disposée entre deux ensembles membrane-électrode 6 et en contact par chacune de ses faces 18 opposées avec un ensemble membrane-électrode. et comprend des gorges sur chacune de ses deux faces opposées. Une plaque séparatrice est dite « monopolaire » lorsqu'elle possède une seule face en contact avec un ensemble membrane-électrode. De telles plaques séparatrices monopolaires (non visibles) se retrouvent aux extrémités de l'empilement de la pile à combustible 2.

Chaque plaque séparatrice 4 est en contact par une de ses faces 18 l'électrode 12 formant anode d'un ensemble membrane-électrode 6 et en contact par l'autre de ses faces 18 avec l'électrode 12 formant cathode de l'autre ensemble membrane-électrode 6.

Chaque plaque séparatrice 4 comprend au moins une gorge 20 ménagée sur chacune de ses faces 18 pour définir avec un ensemble membrane-électrode 6 adjacent des conduits d'alimentation pour la circulation de gaz réactifs en contact avec l'ensemble membrane-électrode 6.

Les gorges 20 des faces 18 de chaque plaque séparatrice 4 sont alimentées séparément en gaz réactifs différents. Les gorges 20 de la face 18 en contact avec une électrode 12 formant l'anode sont alimentées en combustible, par exemple de l'hydrogène, et les gorges 20 de l'autre face 18 en contact avec une électrode 12 formant cathode sont alimentées en comburant, par exemple de l'oxygène ou de l'air.

Les gorges 20 des faces 18 des plaques séparatrices 4 en contact avec les électrodes 12 formant l'anode définissent un compartiment anodique et sont reliées fluidiquement entre elles. Les gorges 20 des faces 18 des plaques séparatrices 4 en contact avec les électrodes 12 formant la cathode définissent un compartiment cathodique et sont reliées fluidiquement entre elles.

Chaque plaque séparatrice 4 comprend des moyens d'alimentation de la ou chaque gorge 20 en gaz réactif, et d'évacuation des gaz réactifs non consommés et des produits résultant du fonctionnement de la pile à combustible.

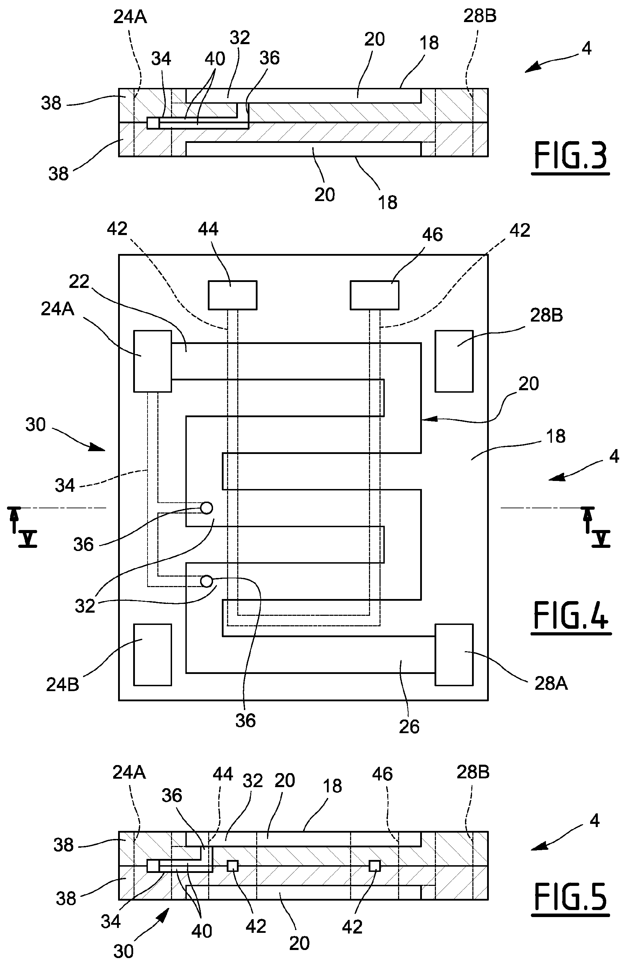

Les plaques séparatrices 4 sont analogues. Une plaque séparatrice 4 et ses moyens d'alimentation en gaz réactif vont maintenant être décrits plus en détail en référence aux Figures 2 et 3.

Tel qu'illustrée sur la Figure 2, la plaque séparatrice 4 comprend sur sa face 18 visible sur la Figure 2 une gorge 20 comprenant un tronçon d'entrée 22 s'alimentant en gaz réactif dans un orifice d'alimentation 24A et un tronçon de sortie 26 débouchant dans un orifice d'évacuation 28A.

La gorge 20 permet l'écoulement du gaz réactif le long de l'ensemble membrane-électrode du tronçon d'entrée 22 vers le tronçon de sortie 26.

La gorge 20 s'étend entre son tronçon d'entrée 22 et son tronçon de sortie 26 suivant un trajet sinueux, ici en boustrophédon.

L'orifice d'alimentation 24A traverse la plaque séparatrice 4. Lorsque plusieurs plaques séparatrices 4 sont empilées, les orifices d'alimentation 24A sont alignés de façon à définir un collecteur d'alimentation s'étendant au travers de l'empilement de la pile à combustible.

L'orifice d'évacuation 28A traverse la plaque séparatrice 4. Lorsque plusieurs plaques séparatrices 4 sont empilées, les orifices d'évacuation 28A sont alignés de façon à définir un collecteur d'évacuation.

La plaque séparatrice 4 comprend un autre orifice d'alimentation 24B et un autre orifice d'évacuation 28B qui ne sont pas reliés fluidiquement à la gorge 20 de la face 18 visible mais à une gorge de la face opposée non visible sur la Figure 2.

En fonctionnement, un des orifices d'alimentation 24A, 24B est alimenté en combustible, et l'autre en comburant.

Les moyens d'alimentation comprennent en outre des moyens d'injection 30 pour l'injection de gaz réactif additionnel dans au moins un tronçon intermédiaire 32 de la gorge 20, situé le long de la gorge 20 entre le tronçon d'entrée 22 et le tronçon de sortie 26. Les moyens d'injection 30 permettent ici l'injection de gaz réactif additionnel dans deux tronçons intermédiaires 32.

Les moyens d'injection 30 comprennent un conduit d'injection 34 s'alimentant en gaz réactif dans l'orifice d'alimentation 24A dans lequel s'alimente le tronçon d'entrée 22 de la gorge 20 et débouchant dans chaque tronçon intermédiaire 32 par un port d'injection 36.

Le conduit d'injection 34 s'étend entre l'orifice d'alimentation 24A et chaque port d'injection 36 en dérivation de la gorge 20. Le conduit d'injection 34 s'étend à l'écart de la face 18 dans laquelle est ménagée la gorge 20, de sorte que le gaz réactif circulant dans le conduit d'injection 34 n'est pas en contact avec l'ensemble membrane-électrode plaqué contre cette face 18.

Comme visible sur la Figure 3, le conduit d'injection 34 s'étend dans l'épaisseur de la plaque séparatrice 4. Chaque port d'injection 36 est formé par un trou s'étendant entre le fond de la gorge 20 et le conduit d'injection 34.

La plaque séparatrice 6 est une « biplaque » : la plaque séparatrice 6 est formée de l'empilement de deux plaques élémentaires 38 plaquée l'une contre l'autre. Le conduit d'injection 34 est défini entre les plaques élémentaires 38. Le conduit d'injection 34 est formé par des canaux 40 ménagés dans les faces en regard des plaques élémentaires 38. Tel qu'illustré, des canaux 40 sont ménagés en correspondance dans les faces en regard des deux plaques élémentaires. En variante, des canaux 40 sont formés dans une seule des plaques élémentaires 38.

Dans l'empilement de la pile à combustible, une face 18 de la plaque séparatrice 4 visible sur la Figure 2 est en contact avec un ensemble membrane-électrode côté cathode.

En fonctionnement, la gorge 20 de cette face 18 est alimentée en oxygène ou en air à partir de l'orifice d'alimentation 24A. Des protons pénètrent dans cette gorge 20 par passage au travers de l'ensemble membrane-électrode. Ces protons se combinent avec des électrons fournis par la cathode et avec l'oxygène et produisent de l'eau.

Les gaz circulant dans la gorge 20 du tronçon d'entrée 22 au tronçon de sortie 26 s'appauvrissent progressivement en gaz réactif et s'enrichissent progressivement en eau le long du trajet de la gorge 20. Il en résulte, d'une part, que l'alimentation en gaz réactif diminue le long de la gorge 20, et, d'autre part que l'humidité et le risque de formation d'un bouchon d'eau dans la gorge 20 augmentent.

Les moyens d'injection 30 permettent l'injection de gaz supplémentaire dans un ou plusieurs tronçons intermédiaires 32 de la gorge 20 le long de la gorge 20. Ce gaz supplémentaire augmente le débit de gaz, favorise l'évacuation de l'humidité et limite le risque de formation d'un bouchon.

En outre, ce gaz étant du gaz réactif, il enrichit le flux en gaz réactif en aval de chaque port d'injection 36, ce qui compense la consommation de gaz réactif en amont de chaque port d'injection 36 et améliore le rendement de la pile à combustible.

En fonction de la forme de la gorge, il est possible de déterminer des tronçons intermédiaires de la gorge dans lesquels, ou en aval desquels, le risque de formation de bouchons liquides est le plus élevé. Les moyens d'injection sont disposés pour une injection de gaz dans ces tronçons intermédiaires.

La plaque séparatrice 4 des Figures 4 et 5 diffère de celle des figures 2 et 3 en ce qu'elle comprend en outre des moyens de refroidissement pour assurer la fonction de refroidissement de la pile à combustible 2.

Les moyens de refroidissement comprennent des conduits de refroidissement 42 internes à la plaque séparatrice 6, formés entre les plaques élémentaires 38, pour la circulation d'un fluide de refroidissement. Les conduits de refroidissement 42 sont alimentés en fluide de refroidissement par l'intermédiaire d'un orifice d'entrée de refroidissement 44 et débouchent dans un orifice de sortie de refroidissement 46 traversant la plaque séparatrice 4. Lorsque les plaques séparatrices 4 sont empilées, les orifices d'entrée de refroidissement 44 et les orifices de sortie de refroidissement 46 sont alignés et définissent respectivement un collecteur d'entrée de refroidissement et un collecteur de sortie de refroidissement.

Pour des raisons de clarté, seule une gorge présentant un trajet simple et les moyens d'injection associés ont été représentés sur les Figures 2 à 5. Bien entendu, une plaque séparatrice peut comprendre plusieurs gorges alimentées parallèles, avec des trajets différents, par exemple en zigzag ou en spirale, et des moyens d'injection de gaz dans une partie ou la totalité des gorges.

L'invention n'est pas limitée aux plaques séparatrices bipolaires mais concerne également les plaques séparatrices monopolaires et de manière générale les plaques séparatrices.

L'invention s'applique aux piles à combustible à membrane échangeuse de protons (PEMFC) et plus généralement aux piles à combustible à membrane échangeuse d'ion. Elle s'applique notamment aux piles à combustible à oxyde solide SOFC (« Solid Oxyde Fuel Cell »).

## Revendications

1. Plaque séparatrice (4) de pile à combustible, comprenant au moins une gorge (20) ménagée dans une face (18) de la plaque séparatrice pour alimenter en gaz réactif un ensemble membrane-électrode (6) appliqué contre la face (18) de la plaque séparatrice (4), la gorge (20) comprenant un tronçon d'entrée (22) et un tronçon de sortie (26), la plaque séparatrice (4) comprenant des moyens d'injection (30) configurés pour injecter du gaz dans au moins un tronçon intermédiaire (32) de la gorge situé entre le tronçon d'entrée (22) et le tronçon de sortie (26), les moyens d'injection comprenant au moins un conduit d'injection (34) s'alimentant en gaz réactif et débouchant dans le tronçon intermédiaire (32) par un port d'injection (36), **caractérisé en ce que** le conduit d'injection (34) s'étend dans l'épaisseur de la plaque séparatrice en étant délimité entre deux plaques élémentaires empilées formant la plaque séparatrice.

2. Plaque séparatrice (4) selon la revendication 1, dans laquelle les moyens d'injection (30) sont configurés pour injecter du gaz réactif.

3. Plaque séparatrice (4) selon la revendication 2, dans laquelle les moyens d'injection (30) s'alimentent en gaz réactif dans un orifice d'alimentation en gaz réactif dans lequel s'alimente le tronçon d'entrée (22) de la gorge (20).

4. Plaque séparatrice (4) selon l'une quelconque des revendications précédentes, dans laquelle le conduit d'injection (34) s'étend en dérivation de la gorge entre un orifice d'alimentation en gaz réactif dans lequel s'alimente le tronçon d'entrée (22) de la gorge (20), et au moins un port d'injection (36).

5. Plaque séparatrice (4) selon l'une quelconque des revendications précédentes, comprenant des conduits de refroidissement s'étendant à l'intérieur de la plaque séparatrice.

6. Plaque séparatrice (4) selon l'une quelconque des revendications précédentes, monopolaire ou bipolaire.

7. Pile à combustible (2) comprenant des plaques séparatrices (4) et des ensembles membrane-électrode (6) empilés en alternance, comprenant au moins une plaque séparatrice (4) selon l'une quelconque des revendications précédentes.

8. Procédé d'alimentation d'une pile à combustible, dans lequel on alimente une gorge (20) ménagée dans une face (18) d'une plaque séparatrice en gaz réactif pour la circulation du gaz réactif en contact avec un ensemble membrane-électrode (6) appliqué contre la face (18) de la plaque séparatrice (4) à partir d'un tronçon d'entrée (22) de la gorge, dans lequel on injecte du gaz supplémentaire dans au moins un tronçon intermédiaire (32) de la gorge (20), situé entre le tronçon d'entrée (22) et le tronçon de sortie (26), par au moins un conduit d'injection (34) s'alimentant en gaz réactif et débouchant dans le tronçon intermédiaire (32) par un port d'injection (36), le conduit d'injection (34) s'étendant dans l'épaisseur de la plaque séparatrice en étant délimité entre deux plaques élémentaires empilées formant la plaque séparatrice.

## Patentansprüche

1. Trennplatte (4) einer Brennstoffzelle, aufweisend mindestens eine Rille (20), die in einer Seite (18) der Trennplatte angeordnet ist, um eine Membran-Elektroden-Anordnung (6), die an der Seite (18) der Trennplatte (4) angeordnet ist, mit reaktiven Gas zu versorgen, wobei die Rille (20) einen Eingangsabschnitt (22) und einen Ausgangsabschnitt (26) aufweist, wobei die Trennplatte (4) Injektionsmittel (30) aufweist, die eingerichtet sind, Gas in mindestens einen Zwischenabschnitt (32) der Rille, der sich zwischen dem Eingangsabschnitt (22) und dem Ausgangsabschnitt (26) befindet, zu injizieren, wobei die Injektionsmittel mindestens eine Injektionsleitung (34), die sich mit reaktivem Gas versorgt und mittels eines Injektionsanschlusses (36) in den Zwischenabschnitt (32) mündet, aufweist, dadurch charakterisiert, dass die Injektionsleitung (34) sich in die Dicke der Trennplatte erstreckt, wobei sie zwischen zwei gestapelten Elementarplatten, die die Trennplatte bilden, eingegrenzt ist.

2. Trennplatte (4) gemäß Anspruch 1, in der die Injektionsmittel (30) zum Injizieren von reaktiven Gas eingerichtet sind.

3. Trennplatte (4) gemäß Anspruch 2, in dem die Injektionsmittel (30) sich an einer Öffnung zum Versorgen mit reaktiven Gas mit reaktiven Gas versorgen, an der sich der Eingangsabschnitt (22) der Rille (20) versorgt.

4. Trennplatte (4) gemäß einem der vorhergehenden Ansprüche, in dem die Injektionsleitung (34) sich abzweigend von der Rille zwischen einer Öffnung zum Versorgen mit reaktiven Gas, an der sich der Eingangsabschnitt (22) der Rille (20) versorgt, und mindestens einem Injektionsanschluss (36) erstreckt.

5. Trennplatte (4) gemäß einem der vorhergehenden Ansprüche, aufweisend Kühlleitungen, die sich im Inneren der Trennplatte erstrecken.

6. Trennplatte (4) gemäß einem der vorhergehenden Ansprüche, die einpolig oder zweipolig ist.

7. Brennstoffzelle (2) aufweisend Trennplatten (4) und Membran-Elektroden-Anordnungen (6), die abwechselnd gestapelt sind, aufweisend mindestens eine Trennplatte (4) gemäß irgendeinem der vorhergehenden Ansprüche.

8. Verfahren zum Versorgen einer Brennstoffzelle, in dem man eine Rille (20), die in einer Seite (18) einer Trennplatte angeordnet ist, mit reaktiven Gas versorgt, für die Zirkulation von reaktiven Gas in Kontakt mit einer Membran-Elektroden-Anordnung (6), die an der Seite (18) der Trennplatte (4) angeordnet ist, ausgehend von einem Eingangsabschnitt (22) der Rille, in dem man zusätzliches Gas in mindestens einen Zwischenabschnitt (32) der Rille (20), der sich zwischen dem Eingangsabschnitt (22) und dem Ausgangsabschnitt (26) befindet, über mindestens eine Injektionsleitung (34) injiziert, die sich mit reaktiven Gas versorgt und in den Zwischenabschnitt (32) durch einen Injektionsanschluss (36) mündet, wobei die Injektionsleitung (34) sich in die Dicke der Trennplatte erstreckt, wobei sie zwischen zwei gestapelten Elementarplatten, die die Trennplatte bilden, eingegrenzt ist.

## Claims

1. A fuel cell separator plate (4), comprising at least one groove (20) formed in a face (18) of the separator plate in order to feed reactant gas to a membrane electrode assembly (6) applied against the face (18) of the separator plate (4), the groove (20) comprising an inlet section (22) and an outlet section (26), the separator plate comprising injection means (30) configured so as to inject gas into at least one intermediate section (32) of the groove situated between the inlet section (22) and the outlet section (26), the injection means comprising at least an injection conduit (34) supplied with reactant gas and opening into the intermediate section (32) through an injection port (36), **characterized in that** the injection conduit (34) extends into the thickness of the separator plate and is delimited between two stacked elementary plates forming the separator plate.

2. A separator plate (4) according to claim 1, in which the injection means (30) are configured so as to inject reactant gas.

3. A separator plate (4) according to claim 2 in which the injection means (30) are supplied with reactant gas in a reactant gas supply orifice wherein the inlet section (22) of the groove (20) is fed.

4. A separator plate (4) according to any preceding claim , in which the injection conduit (34) extends by branching off from the groove between a reactant gas supply orifice in which the inlet section (22) of the groove (20) is supplied, and at least one injection port (36).

5. A separator plate (4) according to any preceding claim, comprising cooling conduits extending in the interior of the separator plate.

6. A separator plate (4) according to any preceding claim, which is monopolar or bipolar.

7. A fuel cell (2) comprising separator plates (4) and membrane-electrode assemblies (6) stacked in alternation, including at least one separator plate (4) according to any one of the preceding claims.

8. A method for feeding a fuel cell, in which a groove (20) formed in one face (18) of a separator plate is fed with the reactant gas in order to ensure the circulation of the reactant gas in contact with a membrane electrode (6) applied against the face (18) of the separator plate (4) from an inlet section (22) of the groove, wherein the additional gas is injected into at least one intermediate section (32) of the groove (20), situated between the inlet section (22) and the outlet section (26), by at least one injection conduit (34) supplied with reactant gas and opening into the intermediate section (32) through an injection port (36), the injection conduit (34) extending into the thickness of the separator plate and being delimited between two stacked elementary plates forming the separator plate.
